# EUROPÄISCHE PATENTSCHRIFT

(11) **EP 1 475 261 B1**
(45) Veröffentlichungstag und Bekanntmachung des Hinweises auf die Patenterteilung: **21.10.2009**
(21) Anmeldenummer: 04006772.0
(22) Anmeldetag: 20.03.2004
(51) Int. Cl.: B60J 5/04

(54) **Seitenaufprallschutzeinrichtung sowie Kraftfahrzeugtür mit solch einer Einrichtung**
Side impact protection device and vehicle door with such a device
Dispositif de protection en cas de choc latéral et porte de véhicule avec un tel dispositif

(30) Priorität: 09.05.2003 DE 10320971
(43) Veröffentlichungstag der Anmeldung: 10.11.2004
(73) Patentinhaber: Dr. Ing. h.c. F. Porsche Aktiengesellschaft, 70435 Stuttgart (DE)
(72) Erfinder: Froeschle, Mathias, 73760 Ostfildern (DE); Garnweidner, Peter, 5112 Lamprechtshausen (AT)

(56) Entgegenhaltungen:
- EP-A- 0 479 400
- WO-A-97/18965
- DE-A1- 4 213 817
- DE-A1- 4 423 687
- DE-A1- 19 715 795
- US-A- 4 307 911
- US-A- 4 411 103
- US-A- 5 277 470
- US-A1- 2002 047 288
- US-B1- 6 196 619
- US-B1- 6 328 359

## Beschreibung

Bei der Erfindung wird ausgegangen von einer Seitenaufprallschutzeinrichtung gemäß Oberbegriff des Anspruchs 1 sowie einer Kraftfahrzeugtür mit einer derartigen Seitenaufprallschutzeinrichtung.

Eine Seitenaufprallschutzeinrichtung der eingangs genannten Art ist der DE 44 05 295 C1 zu entnehmen. Die Seitenaufprallschutzeinrichtung umfasst einen Seitenaufprallträger sowie eine Befestigungseinrichtung, um den Seitenaufprallträger an einem Kraftfahrzeugtürrahmen zu befestigen. Diese Befestigungseinrichtung umfasst eine Konsole, die durch einen Fortsatz des Türrahmens gebildet ist. Die Befestigungseinrichtung weist ferner als Haltebolzen eine Schraube auf, die sowohl die Konsole als auch einen Endabschnitt des Seitenaufprallträgers in Befestigungsdurchbrüchen durchgreift. Die Längsachse des Haltebolzens verläuft rechtwinklig zur im Belastungsfall (Seitenaufprall) relevanten Hauptträgheitsachse des Seitenaufprallträgers. Beim Biegevorgang des Seitenaufprallträgers werden Biegekräfte in die Konsole eingeleitet. Bei Durchbiegung des Seitenaufprallträgers treten außerdem Zugkräfte auf, die eine Relatiwerschiebung zwischen Seitenaufprallträger und Konsole bewirken. Bei der Relatiwerschiebung wirkt eine Auflaufschräge an der Konsole bzw. an dem Seitenaufprallträger, wodurch Zugkräfte in Richtung der Längsachse des Haltebolzens aufgebaut werden. In die Befestigungseinrichtung mit dem Haltebolzen sowie der Konsole und damit auch in den Kraftfahrzeugtürrahmen werden bei der Seitenaufprallschutzeinrichtung die am Seitenaufprallträger wirken Kräfte direkt übertragen.

Aufgabe der Erfindung ist es, eine Seitenaufprallschutzeinrichtung bzw. eine Kraftfahrzeugtür mit einer derartigen Seitenaufprallschutzeinrichtung der eingangs genannten Art anzugeben, die einfach aufgebaut ist und bei der insbesondere die Befestigungseinrichtung im Belastungsfall gering beansprucht ist.

Gelöst wird diese Aufgabe mit einer Seitenaufprallschutzeinrichtung mit den in Anspruch 1 genannten Merkmalen sowie mit einer Kraftfahrzeugtür mit einer solchen Seitenaufprallschutzeinrichtung. Weitere, die Erfindung ausgestaltende Merkmale sind in den entsprechenden Unteransprüchen enthalten.

Die mit der Erfindung hauptsächlich erzielten Vorteile sind darin zu sehen, dass im Belastungsfall, dem Seiten - bzw. Pfahlaufprall, nach dem Deformieren des Verformungswiderstandes (Sollbruchstelle) der Seitenaufprallträger mit seinem Entlastungsdurchbruch über den Haltebolzen an der Konsole geführt wird und so die Verbindungsstelle zwischen Konsole und Seitenaufprallträger geringer belastet ist. Ein weiteres Ansteigen der Zugkräfte in dem Kraftfahrzeugtürteil wird somit verhindert. Der Seitenaufprallträger kann sich bei Biegeverformung durch den Seitenaufprall relativ zur Konsole bewegen, ohne dabei relevante Momente bzw. Kräfte über den Haltebolzen in die Konsole einzuleiten. In der Konsole und damit im Kraftfahrzeugtürteil müssen somit geringere Momente kompensiert werden. Außerdem zeichnet sich die erfindungsgemäße Seitenaufprallschutzeinrichtung durch einen einfachen Aufbau aus, der gegenüber dem Stand der Technik ohne Zusatzteile auskommt.

Gemäß Anspruch 2 wird der Verformungswiderstand durch einen insbesondere durchgehenden Durchreißsteg gebildet, der den Befestigungsdurchbruch von dem Entlastungsdurchbruch trennt und die Sollbruchstelle darstellt. Als alternative Ausführungsform entsprechend Anspruch 9 können der Befestigungsdurchbruch und der Entlastungsdurchbruch als gemeinsamer Durchbruch realisiert sein, der eine schlüssellochartige Kontur aufweist, so dass der Verformungswiderstand am Übergangsbereich zwischen den beiden Lochabschnitten vorliegt.

Bei einem bevorzugten Ausführungsbeispiel gemäß Anspruch 3 ist der Entlastungsdurchbruch als Langloch ausgeführt, das in Richtung der Längserstreckung des Seitenaufprallträgers verläuft, so dass nach dem Überwinden des Verformungswiderstandes eine Dehnung des Seitenaufprallträgers möglich ist, ohne dabei entsprechend Zugkräfte in den Haltebolzen bzw. die Konsole und damit in das Türteil einzuleiten.

Bei einem anderen Ausführungsbeispiel entsprechend Anspruch 4 können mehrere Entlastungsdurchbrüche hintereinander angeordnet sein, zwischen denen jeweils ein weiterer Durchreißsteg bzw. ein Verformungswiderstand liegt. Die Durchreißstege dienen jeweils als Sollbruchstelle, wenn durch die Dehnung des Seitenaufprallträgers entsprechend hohe Zugkräfte zwischen Haltebolzen und entsprechendem Durchreißsteg anliegen. Mithin kann die Krafteinleitung in das Türteil gesteuert werden.

Ist die Weite des Entlastungsdurchbruchs größer als der Außendurchmesser des Haltebolzens, wie dies in Anspruch 6 angegeben ist, kann sich der Seitenaufprallträger nach dem Versagen des Durchreißsteges an die Konsole anlegen, wodurch das Kraftfahrzeugtürteil im wesentlichen momentfrei belastet wird und hauptsächlich Stützkräfte aufnehmen muss.

Bei einem anderen, in Anspruch 7 angegebenen Ausführungsbeispiel kann sich das Langloch in einem vom Befestigungsdurchbruch abgewandten Lochabschnitt verengen, und zwar derart, dass die Weite in diesem Lochanschnitt zumindest bereichsweise geringer als der Außendurchmesser des Haltebolzens ist, wodurch zwar Momente/Kräfte in das Türteil eingeleitet werden, jedoch die Biegeverformung des Seitenaufprallträgers und damit die Eindringtiefe eines Gegenstandes beim Seitenaufprall beeinflussbar ist.

Bei einem in Anspruch 11 angeführten Ausführungsbeispiel ist vorteilhaft, dass nach dem Deformieren des Verformungswiderstandes der Seitenaufprallträger sich an die Konsole anlegen kann und die Stützkräfte aufnimmt, wie dies in Zusammenhang mit Anspruch 6 oben dargelegt ist.

Die Erfindung wird nachfolgend anhand von Ausführungsbeispielen mit Bezug auf die Zeichnung näher erläutert. Es zeigen:
- Fig. 1: ausschnittweise eine Kraftfahrzeugtür mit einer Seitenaufprallschutzeinrichtung nach einem ersten Ausführungsbeispiel,
- Fig. 2 bis 4: die Seitenaufprallschutzeinrichtung in unterschiedlichen Verformungszuständen,
- Fig. 5 und 6: jeweils einen Schnitt entlang der Linien V - V und VI - VI in Fig. 2, und
- Fig. 7 bis 9: jeweils ein weiteres Ausführungsbeispiel einer Seitenaufprallschutzeinrichtung mit unterschiedlichen Entlastungsdurchbrüchen.

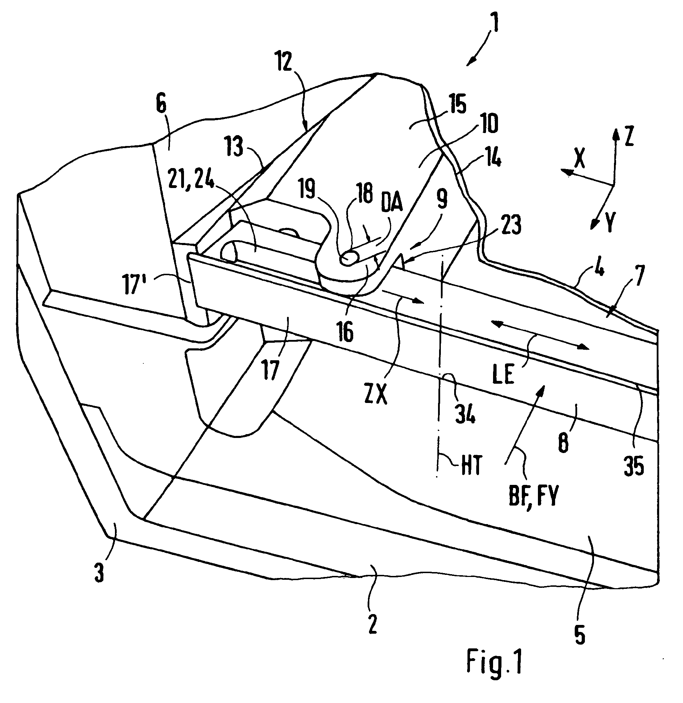

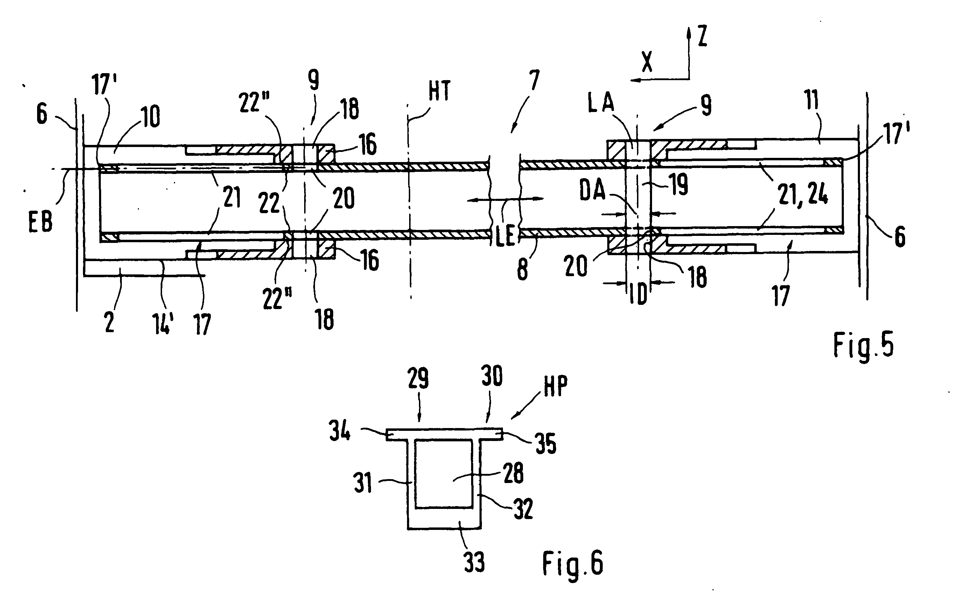

Fig. 1 zeigt ausschnittweise eine Kraftfahrzeugtür, die im folgenden als Tür 1 bezeichnet wird. Die Tür 1 kann mehrteilig ausgeführt sein, also mehrere zusammengesetzte Kraftfahrzeugtürteile aufweisen, von denen beispielhaft ein rahmenartiges, insbesondere umlaufendes, Kraftfahrzeugtürteil 2 gezeigt ist, das auch als Türinnenteil bezeichnet wird, an dem ein Türaußenteil, insbesondere Außenblech, befestigt wird. In der weiteren Beschreibung wird das Kraftfahrzeugtürteil 2 lediglich als Türteil 2 bezeichnet. Das Türteil 2 kann aus mehreren Einzelteilen zusammengesetzt sein oder einstückig hergestellt werden. Insbesondere ist das Türteil 2 als Leichtmetall - Gussteil einteilig realisiert. Es besitzt einen äußeren Flansch 3, an dem als Außenteil eine Außenhaut (nicht dargestellt) bzw. Außenblech befestigt werden kann. Ein innerer Flansch 4 dient der Befestigung eines hier nicht gezeigten Türinnenblechs bzw. einer Innenverkleidung. In Fig. 1 ist teilweise ein unterer, quer verlaufender Rahmenschenkel 5 und ausschnittweise ein im wesentlichen aufrecht verlaufender Rahmenschenkel 6 des Türteils 2 zu sehen, welcher Rahmenschenkel 6 benachbart zur A - Säule (nicht dargestellt) der Kraftfahrzeugkarosserie angeordnet ist und beispielsweise etwa parallel zu dieser A - Säule verläuft. Ein zweiter aufrechter Rahmenschenkel 6 des Türteils 2 ist in Fig. 5 zu sehen, der benachbart zur B - Säule (nicht gezeigt) zu liegen kommt, wenn die Tür 1 geschlossen ist. Die Tür 1 könnte jedoch auch zwischen B - und C - Säule angeordnet sein.

Die Tür 1 ist mit einer Seitenaufprallschutzeinrichtung 7 versehen, die einen Seitenaufprallträger 8 und eine Befestigungseinrichtung 9 aufweist, mit der der Seitenaufprallträger 8 an dem Türteil 2 befestigbar ist. Der Seitenaufprallträger 8 erstreckt sich quer zwischen den beiden mit Abstand zueinander liegenden, aufrechten Rahmenschenkeln 6 (Fig. 5), so dass der Seitenaufprallträger 8 parallel oder unter einem Winkel zu dem unteren Rahmenschenkel 5 verläuft. Aus Fig. 5 wird deutlicht, dass die Befestigungseinrichtung 9 der Befestigung des Seitenaufprallträgers 8 dienende Konsolen 10 und 11 umfasst, von denen jede an einem der Rahmenschenkel 6 angeordnet ist und den Seitenaufprallträger 8 etwa endseitig hält. Die Konsolen 10 und 11 können mit dem entsprechenden Rahmenschenkel 6 beispielsweise durch Schrauben verbunden oder ggf. einstückig mit dem Türteil 2 hergestellt werden, insbesondere wenn das Türteil 2 als Leichtmetall - Gussteil gefertigt wird. Die Konsolen 10 bzw. 11 könnten als Einlegeteile auch in des Türteil 2 eingegossen sein.

Im gezeigten Ausführungsbeispiel sind die Konsolen 10 und 11 jeweils in einem Aufnahmebett 12 eingesetzt, in dem sie beispielsweise an einer vorderen Anlagefläche 13, einer hinteren Anlagefläche 14 und ggf. einer unteren Anlagefläche 14' (Fig. 5) abgestützt sind, so dass eine Abstützung der Konsolen 10 und 11 sowohl in X -, Y-, und Z - Richtung gegeben ist.

Die Konsolen 10 und 11 können grundsätzlich in den wesentlichen Ausgestaltungen identisch ausgeführt sein. Im folgenden wird daher lediglich die Konsole 10 näher beschrieben: Sie besitzt einen blockartigen Grundkörper 15, der der Befestigung bzw. Verbindung mit dem Türteil 2 dient und an den Anlageflächen 13, 14 und 14' anliegt. Von dem Grundkörper 15 gehen einstückig zwei in z - Richtung mit Abstand zueinander liegende Fortsätze 16 aus, so dass eine gabelartige Aufnahme für einen Endabschnitt 17 des Seitenaufprallträgers 8 gebildet ist. Der Endabschnitt 17 des Seitenaufprallträgers liegt somit zwischen den beiden Fortsätzen 16. Jeder Fortsatz weist einen ersten Befestigungsdurchbruch 18 auf, durch die ein Haltebolzen 19 gesteckt ist, der beispielsweise als in der Konsole 10 bzw. 11 festgelegte Schraube ausgeführt sein kann. Der Haltebolzen 19 durchgreift ferner im Bereich des Endabschnitts 17 des Seitenaufprallträgers 8 vorgesehene zweite Befestigungsdurchbrüche 20. Die ersten und/oder zweiten Befestigungsdurchbrüche 18, 20 sind mit ihrem Innendurchmesser ID (Fig. 5) an den Außendurchmesser DA des Haltebolzens 19 angepasst, so dass der Haltebolzen 19 im wesentlichen spielfrei gehalten ist. Alternativ wäre es möglich, die ersten und/oder zweiten Befestigungsdurchbrüche 18 und/oder 20 in X - Richtung zu vergrößern, um einen Längen - Toleranzausgleich zu schaffen.

In Richtung der Längserstreckung LE des Seitenaufprallträgers 8 sind hinter den zweiten Befestigungsdurchbrüchen 20 im Seitenaufprallträger 8 Entlastungsdurchbrüche 21 im Endabschnitt 17 eingebracht, die in X - Richtung mit Abstand zum Befestigungsdurchbruch 20 im Seitenaufprallträger 8 benachbart zu dessen Ende 17' liegen, so dass zwischen den Befestigungsdurchbrüchen 20 und den Entlastungsdurchbrüchen 21 jeweils ein deformierbarer Verformungswiderstand 22' angeordnet ist, der durch einen als Materialvorsprung 22" ausgeführten Durchreißsteg 22 gebildet ist, der als Sollbruchstelle im Belastungsfalls (Pfeil BF) beim Seitenaufprall bei einer Kraft FY versagt, wobei die Kraft FY wenigstens eine Kraftkomponente besitzt, deren Wirklinie in Y - Richtung orientiert ist. Dabei wird der Seitenaufprallträger 8 auf Biegung beansprucht, entsprechend verformt und er kann außerdem in Richtung seiner Längserstreckung LE gedehnt bzw. verlängert werden, wodurch Zugkräfte ZX wirken, die zumindest eine Kraftkomponente in X - Richtung aufweisen und über den beispielsweise durchgehenden Durchreißsteg 22 auf den Haltebolzen 19 übertragen werden. Nach einer nicht gezeigten Alternative könnten die Entlastungsdurchbrüche 21 an der Konsole 10 in den Fortsätzen 16 eingebracht sein. Im Unterschied zum gezeigten Ausführungsbeispiel wären die Entlastungsdurchbrüche 21 allerdings - in Längserstreckung LE gesehen - vor den Befestigungsdurchbrüchen 18 angeordnet. Obwohl in Fig. 5 beide Endabschnitte 17 des Seitenaufprallträgers 8 mit jeweils einer den Verformungswiderstand 22' aufweisenden Befestigungseinrichtung 9 ausgestattet sind, könnte in einer nicht gezeigten Alternative lediglich einer der beiden Endabschnitte 17 an das Türteil 2 entsprechend angebunden sein, so dass in einem der beiden Endabschnitte lediglich die Befestigungsdurchbrüche 20 und in der entsprechenden Konsole 10 oder 11 die Befestigungsdurchbrüche 18 eingebracht sind, durch die der Haltebolzen 19 gesteckt bzw. geschraubt ist.

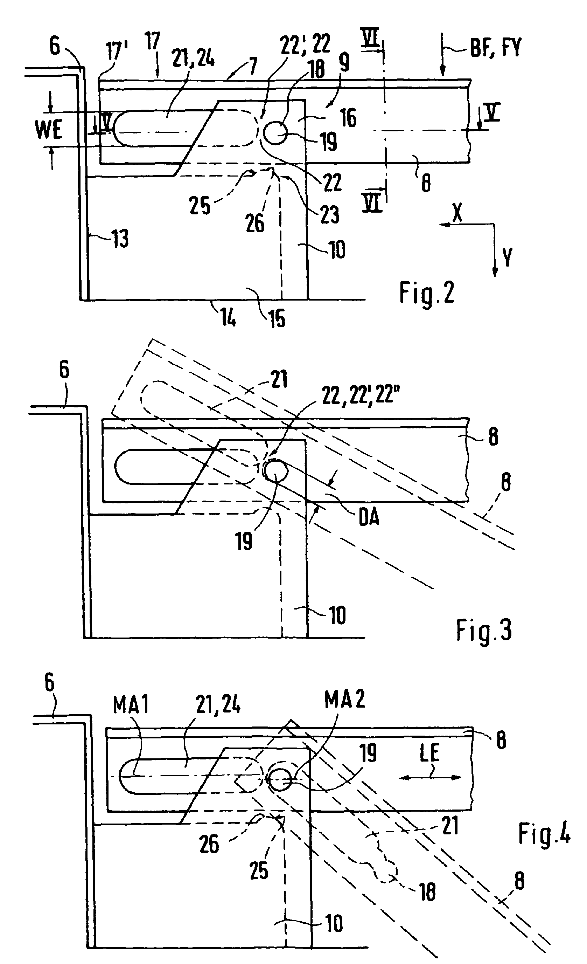

Anhand der Fig. 2 bis 4 wird der Belastungsfall BF beim Seitenaufprall anhand der verschiedenen Verformungsgrade des Seitenaufprallträgers 8 näher beschrieben. Gleiche bzw. gleichwirkende Teile in den Fig. 1 und 5 sind in den Fig. 2 bis 4 mit denselben Bezugszeichen versehen. In Fig. 2 ist die Seitenaufprallschutzeinrichtung 7 mit dem Seitenaufprallträger 8 in unverformter Ausgangsstellung dargestellt. Es ist ersichtlich, dass der Seitenaufprallträger 8 unter Bildung eines Spaltes 23 mit Abstand zum Grundkörper 15 der Konsole 10 liegt. Der Seitenaufprallträger 8 ist in dieser Ausgangsposition durch den Haltebolzen 19 mit der Konsole 18 verbunden. Wirkt die Kraft FY, wird der Seitenaufprallträger 8 auf Biegung beansprucht und verformt sich entsprechend in Abhängigkeit der Höhe der wirkenden Kraft FY. In Fig. 3 ist der durch Biegung verformte Seitenaufprallträger 8 gestrichelt eingezeichnet. Durch seine schwenkbare Lagerung um den in Z- Richtung verlaufenden Haltebolzen 19 wird der gebogene Seitenaufprallträger 8 im Uhrzeigersinn geschwenkt, so dass sich sein Endabschnitt 17 aus der gabelartigen Aufnahme der Fortsätze 16 herausbewegt. Durch die Biegung in Folge der Einleitung der Kraft FY wird der Seitenaufprallträger 8 außerdem auf Zug beansprucht, so dass an dem Haltebolzen 19 die Zugkraft ZX wirkt und der Verformungswiderstand 22' bzw. der Durchreißsteg 22 durch Kraftbeaufschlagung entsprechend plastisch deformiert wird, bis der Haltebolzen 19 in Richtung zum dahinterliegenden Entlastungsdurchbruch 21 durch das Material des Seitenaufprallträgers 8 wandert und der Durchreißsteg 22 schließlich vollständig versagt bzw. der Verformungswiderstand 22' durch Deformation überwunden und der Haltebolzen 19 in den Entlastungsdurchbruch 21 eingetreten ist, was aus Fig. 4 beim gestrichelt gezeichneten Seitenaufprallträger 8 hervorgeht. Wenn der Haltebolzen 19 den Durchreißsteg 22 durchtrennt bzw. den Verformungswiderstand 22' überwunden, also deformiert hat, werden keine Zugkräfte ZX auf den Haltebolzen 19 übertragen, wodurch über den Haltebolzen 19 keine Momente und Zugkräfte in die Konsole 10 bzw. in das Türteil 2 eingeleitet werden. Dies ist insbesondere bei Werkstoffen für das Türteil 2 von Vorteil, welche Werkstoffe geringe Festigkeitskennwerte, beispielsweise Dehnung, aufweisen.

Aus den Fig. 2 bis 4 ist ersichtlich, dass die in Y - Richtung gemessene Weite WE des als Langloch 24 realisierten Entlastungsdurchbruchs 21 größer als der Außendurchmesser DA des Haltebolzens 19 ist. Beim Durchreißen des Steges 22 kann der Seitenaufprallträger 8 den Spalt 23 schließen und sich an ein Auflager 25 anlegen, welches am Grundkörper 15 der Konsole 10 dem Seitenaufprallträger 8 zugewandt ausgebildet ist. Das Auflager 25 weist in bevorzugter Ausführungsform eine gebogenen Auflagefläche 26 auf, so dass der Seitenaufprallträger 8 bei unterschiedlich ausgeprägten Durchbiegungen auf dem Auflager 25 abwälzen kann. Durch das Auflager 25 wird der Seitenaufprallträger 8 in Y - Richtung an der Konsole 10 abgestützt, wobei die Verbindung über den Haltebolzen 19 im wesentlichen lastfrei vorliegt. Der Grundkörper 15 der Konsole 10 und damit das Türteil 2 muss somit lediglich Stützkräfte in Y - Richtung aufnehmen und ist dabei ohne relevante Momente belastet. Gemäß Fig. 5 wird hierzu deutlich, dass die jeweilige Längsachse LA der Haltebolzen 19 parallel zu den aufrechten bzw. etwa parallel zur Z - Richtung verlaufenden Rahmenschenkeln 6 des Türteil 2 verläuft. Die Rahmenschenkel 6 könnten allerdings auch einen Winkel mit einer Vertikalen (Z - Richtung) einschließen. In jedem Fall ist die Längsachse LA des Haltebolzens 19 entsprechend der im Belastungsfall BF relevanten Hauptträgheitsachse HT des Seitenaufprallträgers 8 ausgerichtet, ist also etwa parallel zu dazu orientiert.

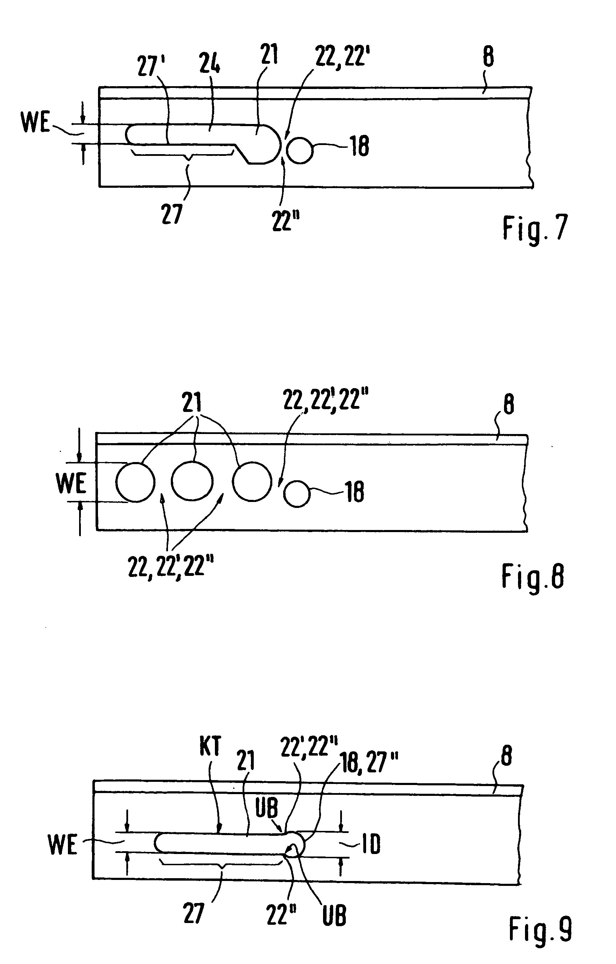

Anhand der Fig. 7 bis 9 werden im folgenden noch Ausführungsbeispiele für unterschiedlich ausgestaltete Entlastungsdurchbrüche 21 erläutert. In Fig. 7 ist das Langloch 24 in einen vom Befestigungsdurchbruch 18 beabstandet liegenden Lochabschnitt 27 verjüngt ausgeführt. Dabei kann die in Y - Richtung gemessene Weite WE des verjüngten Lochabschnitts 27 geringer sein als der Außendurchmesser DA des Haltebolzens 19, so dass sich beim Eintritt des Haltebolzens 19 in den Lochabschnitt 27 eine Materialverformung des den Lochabschnitt 27 umgebenden Randbereichs 27' des Seitenaufprallträgers 8 ergibt. Der verjüngte Lochabschnitt 27 kann mit größerem Abstand zum Grundkörper 15 der Konsole 10 liegen, so dass bei durchtrenntem Durchreißsteg 22 das Anlegen des Seitenaufprallträgers 8 an die Auflagerfläche 26 gewährleistet ist.

Beim in Fig. 8 gezeigten Ausführungsbeispiel sind - in Längserstreckung LE gesehen - hintereinander mehrere ggf. kreisförmige Entlastungsdurchbrüche 21 mit Abstand zueinander angeordnet, so dass zwischen benachbarten Entlastungsdurchbrüchen 21 jeweils ein Durchreißsteg 22 ausgebildet ist, der wie der Durchreißsteg 22 zwischen dem Entlastungsdurchbruch 21 und dem Befestigungsdurchbruch 22 als Sollbruchstelle dient. Die Weite WE der Entlastungsdurchbrüche 21 kann geringer oder größer als der Außendurchmesser DA oder gleicht dem Außendurchmesser DA des Haltebolzens 19 sein. Denkbar wäre es allerdings auch, die hintereinander angeordneten Entlastungsdurchbrüche 21 mit unterschiedlicher Weite WE auszugestalten.

Fig. 9 zeigt ein weiteres Ausführungsbeispiel eines Entlastungsdurchbruches 21, der durchgehend mit dem Befestigungsdurchbruch 18 bzw. 20, also als gemeinsamer Durchbruch ausgeführt ist, dessen Kontur KT schlüssellochartig ist. Der längliche Lochabschnitt 27 ist mit dem kreisförmigen Lochabschnitt 27", der den Befestigungsdurchbruch 18 bzw. 20 darstellt, verbunden. Der deformierbare bzw. zu überwindende Verformungswiderstand 22' wird hier an dem enger werdenden Übergangsabschnitt UB durch den Materialvorsprung 22" zwischen den beiden Lochabschnitten 27 und 27" gebildet. Die Weite WE des länglichen Lochabschnitts 27 ist geringer als der Innendurchmesser ID des kreisförmigen Lochabschnitts 27".

In Fig. 4 ist noch zu sehen, dass der Entlastungsdurchbruch 21, im gezeigten Ausführungsbeispiel das Langloch 24, quer zur Längserstreckung LE versetzt zum Befestigungsdurchbruch 18 bzw. 20 liegen kann. Dabei ist die Mittellängsachse MA1 des Entlastungsdurchbruchs 21 mit seitlichem Versatz zur Mittelachse MA2 des Befestigungsdurchbruchs 18 bzw. 20 angeordnet. Die Mittellängsachse MA1 und die Mittelachse MA2 könnten jedoch alternativ fluchtend ausgerichtet sein oder unter einem Winkel zueinander verlaufen. Selbstverständlich sind die beschriebenen Ausführungsformen der verschiedenen Entlastungsdurchbrüche 21 miteinander kombinierbar. Bei sämtlichen Ausführungsbeispielen liegt der den Verformungswiderstand 22' bildende Materialvorsprung 22" zumindest teilweise in der Ebene EB des Entlastungsdurchbruchs 21. Denkbar wäre es außerdem, die Seitenaufprallschutzeinrichtung 7 einer Seitenwand des Kraftfahrzeugs zuzuordnen, die keine Tür aufweist.

Anhand der Fig. 6 wird der Seitenaufprallträger 8 näher beschreiben. Er ist als Hohlprofil HP mit mittlerer Ausnehmung 28 realisiert und insbesondere als Strangpress - Hohlprofil ausgebildet. Das Profil setzt sich aus zwei ineinander übergehenden T - förmigen Teilprofilen 29 und 30 zusammen derart, dass die parallel zueinander erlaufenden Profilabschnitte 31 und 32 über einen Basis 33 miteinander verbunden sind. Die fluchtenden, oberen T - Stücke 34 und 35 gehen ineinander über. Die Profilabschnitte 31 und 32 können dieselbe Materialstärke wie die T - Stücke 34 und 35 aufweisen oder dicker oder dünner sein. Die Basis 33 kann gegenüber den anderen Profilwänden verstärkt ausgeführt sein. Im Zusammenhang mit Fig. 1 bzw. 2 wird klar, dass der Seitenaufprallträger 8 so zum Belastungsfall BF ausgerichtet ist, dass die T - Stücke 34 und 35 von der Konsole 10 bzw. 11 abgewandt liegen bzw. parallel zum hier nicht gezeigten Türaußenblech verlaufen. Mithin sind die Befestigungsdurchbrüche 20 und die Entlastungsdurchbrüche 21 in den Profilschenkeln 31 und 32 eingebracht.

## Patentansprüche

1. Seitenaufprallschutzeinrichtung mit einem Seitenaufprallträger (8) und mit einer Befestigungseinrichtung für den Seitenaufprallträger (8) an einem Kraftfahrzeugtürteil (2), welche Befestigungseinrichtung wenigstens eine Konsole (10, 11) und einen Haltebolzen (19) aufweist, der sowohl die Konsole (10, 11) und einen Endabschnitt des Seitenaufprallträgers (8) jeweils in Befestigungsdurchbrüchen (18, 20) durchgreift, **dadurch gekennzeichnet, dass** mit Abstand - in Längserstreckung (LE) des Seitenaufprallträgers (8) gesehen - hinter dem Befestigungsdurchbruch (18) in dem Seitenaufprallträger (8) oder in der Konsole (10, 11) zumindest ein Entlastungsdurchbruch (21) ausgebildet ist, dass zwischen dem Befestigungsdurchbruch (18) und dem Entlastungsdurchbruch (21) ein Materialvorsprung (22") als Verformungswiderstand (22') liegt, nach dessen Deformieren der Haltebolzen (19) in den Entlastungsdurchbruch (21) eintritt, und dass die Längsachse (LA) des Haltebolzens (19) etwa parallel zur im Belastungsfall (BF) des Seitenaufprallträgers (8) relevanten Hauptträgheitsachse (HT) verläuft.

2. Seitenaufprallschutzeinrichtung nach Anspruch 1, **dadurch gekennzeichnet, dass** der Verformungswiderstand (22') von einem Durchreißsteg (22) gebildet ist.

3. Seitenaufprallschutzeinrichtung nach Anspruch 1, **dadurch gekennzeichnet, dass** der Entlastungsdurchbruch (21) als Langloch (24) ausgebildet ist, das etwa in Richtung der Längserstreckung (LE) des Seitenaufprallträgers (8) verläuft.

4. Seitenaufprallschutzeinrichtung nach Anspruch 2, **dadurch gekennzeichnet, dass** mehrere Entlastungsdurchbrüche (21) - in Längserstreckung (LE) des Seitenaufprallträgers (8) gesehen - hintereinander angeordnet sind und dass zwischen zwei benachbarten Entlastungsdurchbrüchen (21) jeweils ein weiterer Durchreißsteg (22) liegt.

5. Seitenaufprallschutzeinrichtung nach Anspruch 1, **dadurch gekennzeichnet, dass** die Konsole (10, 11) ein Auflager (25) für den Seitenaufprallträger (8) besitzt, an das sich der Seitenaufprallträger (8) anlegt, wenn der Verformungswiderstand (22') deformiert ist und der Haltebolzen (19) in den Entlastungsdurchbruch (21) eingetreten ist.

6. Seitenaufprallschutzeinrichtung nach Anspruch 1, **dadurch gekennzeichnet, dass** die Weite (WE) des Entlastungsdurchbruches (21) größer als der Außendurchmesser (DA) des Haltebolzens (19) ist.

7. Seitenaufprallschutzeinrichtung nach Anspruch 1, **dadurch gekennzeichnet, dass** sich die Weite (WE) des Langlochs (24) im vom Befestigungsdurchbruch (20) abgewandten Lochabschnitt (27) verengt und dass die Weite (WE) in diesem Lochabschnitt (27) zumindest abschnittsweise geringer als der Außendurchmesser (DA) des Haltebolzens (19) ist.

8. Seitenaufprallschutzeinrichtung nach Anspruch 1, **dadurch gekennzeichnet, dass** die Weite (WE) des Entlastungsdurchbruchs (21) geringer als der Außendurchmesser (DA) des Haltebolzens (19) ist.

9. Seitenaufprallschutzeinrichtung nach Anspruch 8, **dadurch gekennzeichnet, dass** der Entlastungsdurchbruch (21) und der Befestigungsdurchbruch (18, 20) durchgehend mit einer schlüssellochförmigen Kontur (KT) ausgeführt sind.

10. Seitenaufprallschutzeinrichtung nach Anspruch 1, **dadurch gekennzeichnet, dass** die Weite (WE) des Entlastungsdurchbruchs (21) gleich dem Außendurchmesser (DA) des Haltebolzens (19) ist.

11. Seitenaufprallschutzeinrichtung nach Anspruch 7 oder 8, **dadurch gekennzeichnet, dass** der Entlastungsdurchbruch (21) - quer zur Längserstreckung (LE) des Seitenaufprallträgers (8) gesehen - versetzt zum Befestigungsdurchbruch (18, 20) angeordnet ist.

12. Seitenaufprallschutzeinrichtung nach Anspruch 1, **dadurch gekennzeichnet, dass** der Seitenaufprallträger (8) als Leichtmetall - Strangpressprofil und die Konsole (10, 11) als Leichtmetall - Gussteil ausgeführt ist.

13. Seitenaufprallschutzeinrichtung nach Anspruch 1 oder 12, **dadurch gekennzeichnet, dass** der Seitenaufprallträger (8) als geschlossenes Hohlprofil (HP) realisiert ist.

14. Seitenaufprallschutzeinrichtung nach Anspruch 5, **dadurch gekennzeichnet, dass** das Auflager (25) als Vorsprung ausgeführt ist und eine gewölbte Auflagefläche (26) aufweist.

15. Kraftfahrzeugtür mit einer Seitenaufprallschutzeinrichtung nach zumindest einem der Ansprüche 1 bis 14.

16. Kraftfahrzeugtür nach Anspruch 15, **dadurch gekennzeichnet, dass** die Konsole (10, 11) einstückig mit dem Kraftfahrzeugtürteil (2) ausgebildet ist.

17. Kraftfahrzeugtür nach Anspruch 15 oder 16 **dadurch gekennzeichnet, dass** das Kraftfahrzeugtürteil (2) und die Konsole (10, 11) als Leichtmetall - Gussteil hergestellt sind.

18. Kraftfahrzeugtür nach Anspruch 15, **dadurch gekennzeichnet, dass** das Kraftfahrzeugtürteil (2) rahmenartig mit zwei mit Abstand zueinander liegenden, etwa aufrecht verlaufenden Rahmenschenkel (6) ausgebildet ist, dass an zumindest einem der Rahmenschenkel (6) eine Konsole (10, 11) angeordnet ist und dass sich der Seitenaufprallträger (8) quer zwischen den beiden Rahmenschenkeln (6) erstreckt.

19. Kraftfahrzeugtür nach Anspruch 16, **dadurch gekennzeichnet, dass** die Längsachse (LA) des Haltebolzens (19) etwa parallel zum vertikalen Rahmenschenkel (6) verläuft.

20. Kraftfahrzeugtür nach Anspruch 15 und 17, **dadurch gekennzeichnet, dass** die Konsole (10, 11) in das Kraftfahrzeugtürteil (2) eingegossen ist.

## Claims

1. Side impact protection device with a side impact protection beam (8) and with a fastening device for fastening the side impact protection beam (8) to a motor vehicle door part (2), which fastening device has at least one bracket (10, 11) and a retaining pin (19) which reaches through both the bracket (10, 11) and an end section of the side impact protection beam (8) in respective fastening apertures (18, 20), **characterized in that** at least one load-relieving aperture (21) is formed at a distance - as seen in the longitudinal extent (LE) of the side impact protection beam (8) - behind the fastening aperture (18) in the side impact protection beam (8) or in the bracket (10, 11), **in that** a material projection (22") lies between the fastening aperture (18) and the load-relieving aperture (21) as a deformation resistance (22'), after the deformation of which the retaining pin (19) enters the load-relieving aperture (21), and **in that** the longitudinal axis (LA) of the retaining pin (19) runs approximately parallel to the main axis of inertia (HT) relevant in the loading situation (BF) of the side impact protection beam (8).

2. Side impact protection device according to Claim 1, **characterized in that** the deformation resistance (22') is formed by a tear-through web (22).

3. Side impact protection device according to Claim 1, **characterized in that** the load-relieving aperture (21) is designed as an elongated hole (24) which runs approximately in the direction of longitudinal extent (LE) of the side impact protection beam (8).

4. Side impact protection device according to Claim 2, **characterized in that** a plurality of load-relieving apertures (21) are arranged one behind another - as seen in the longitudinal extent (LE) of the side impact protection beam (8), and **in that** a further tear-through web (22) lies in each case between two adjacent load-relieving apertures (21).

5. Side impact protection device according to Claim 1, **characterized in that** the bracket (10, 11) has a support (25) for the side impact protection beam (8), against which support the side impact protection beam (8) bears when the deformation resistance (22') is deformed and the retaining pin (19) has entered the load-relieving aperture (21).

6. Side impact protection device according to Claim 1, **characterized in that** the width (WE) of the load-relieving aperture (21) is larger than the outside diameter (DA) of the retaining pin (19).

7. Side impact protection device according to Claim 1, **characterized in that** the width (WE) of the elongated hole (24) narrows in the hole section (27) which faces away from the fastening aperture (20), and **in that** the width (WE) in said hole section (27) is smaller at least in sections than the outside diameter (DA) of the retaining pin (19).

8. Side impact protection device according to Claim 1, **characterized in that** the width (WE) of the load-relieving aperture (21) is smaller than the outside diameter (DA) of the retaining pin (19).

9. Side impact protection device according to Claim 8, **characterized in that** the load-relieving aperture (21) and the fastening aperture (18, 20) are of continuous design with a keyhole-shaped contour (KT).

10. Side impact protection device according to Claim 1, **characterized in that** the width (WE) of the load-relieving aperture (21) is identical to the outside diameter (DA) of the retaining pin (19).

11. Side impact protection device according to Claim 7 or 8, **characterized in that** the load-relieving aperture (21) is arranged offset with respect to the fastening aperture (18, 20) - as seen transversely with respect to the longitudinal extent (LE) of the side impact protection beam (8).

12. Side impact protection device according to Claim 1, **characterized in that** the side impact protection beam (8) is designed as a light metal extruded profile and the bracket (10, 11) is designed as a light metal cast part.

13. Side impact protection device according to Claim 1 or 12, **characterized in that** the side impact protection beam (8) is realized as a closed hollow profile (HP).

14. Side impact protection device according to Claim 5, **characterized in that** the support (25) is designed as a projection and has a curved supporting surface (26).

15. Motor vehicle door with a side impact protection device according to at least one of Claims 1 to 14.

16. Motor vehicle door according to Claim 15, **characterized in that** the bracket (10, 11) is formed integrally with the motor vehicle door part (2).

17. Motor vehicle door according to Claim 15 or 16, **characterized in that** the motor vehicle door part (2) and the bracket (10, 11) are produced as a light metal cast part.

18. Motor vehicle door according to Claim 15, **characterized in that** the motor vehicle door part (2) is of frame-like design with two frame limbs (6) which lie at a distance from each other and run approximately vertically, **in that** a bracket (10, 11) is arranged on at least one of the frame limbs (6), and **in that** the side impact protection beam (8) extends transversely between the two frame limbs (6).

19. Motor vehicle door according to Claim 16, **characterized in that** the longitudinal axis (LA) of the retaining pin (19) runs approximately parallel to the vertical frame limb (6).

20. Motor vehicle door according to Claims 15 and 17, **characterized in that** the bracket (10, 11) is cast into the motor vehicle door part (2).

## Revendications

1. Dispositif de protection en cas de choc latéral avec une poutre de choc latéral (8) et avec un dispositif de fixation pour la poutre de choc latéral (8) à une partie de porte de véhicule automobile (2), dispositif de fixation qui comprend au moins une console (10, 11) et un boulon de maintien (19), qui traverse aussi bien la console (10, 11) qu'une section d'extrémité de la poutre de choc latéral (8) chaque fois dans des ouvertures de fixation (18, 20), **caractérisé en ce qu'**une ouverture de délestage (21) est réalisée dans la poutre de choc latéral (8) ou dans la console (10, 11), à distance derrière l'ouverture de fixation (18) - considérée selon la dimension longitudinale (LE) de la poutre de choc latéral (8) -, **en ce qu'**une saillie matérielle (22") formant résistance à la déformation (22') est située entre l'ouverture de fixation (18) et l'ouverture de délestage (21), saillie après la déformation de laquelle le boulon de maintien (19) pénètre dans l'ouverture de délestage (21), et **en ce que** l'axe longitudinal (LA) du boulon de maintien (19) est sensiblement parallèle à l'axe d'inertie principal (HT) concerné en cas de sollicitation (BF) de la poutre de choc latéral (8).

2. Dispositif de protection en cas de choc latéral selon la revendication 1, **caractérisé en ce que** la résistance à la déformation (22') est formée par une nervure de déchirement (22).

3. Dispositif de protection en cas de choc latéral selon la revendication 1, **caractérisé en ce que** l'ouverture de délestage (21) est réalisée en forme de trou oblong (24), qui s'étend sensiblement dans la direction de la dimension longitudinale (LE) de la poutre de choc latéral (8).

4. Dispositif de protection en cas de choc latéral selon la revendication 2, **caractérisé en ce que** plusieurs ouvertures de délestage (21) sont disposées l'une derrière l'autre - vues selon la dimension longitudinale (LE) de la poutre de choc latéral (8) - et **en ce qu'**une autre nervure de déchirement (22) est chaque fois située entre deux ouvertures de délestage voisines (21).

5. Dispositif de protection en cas de choc latéral selon la revendication 1, **caractérisé en ce que** la console (10, 11) comporte un appui (25) pour la poutre de choc latéral (8), sur lequel la poutre de choc latéral (8) repose lorsque la résistance à la déformation (22') est déformée et que le boulon de maintien (19) a pénétré dans l'ouverture de délestage (21).

6. Dispositif de protection en cas de choc latéral selon la revendication 1, **caractérisé en ce que** la largeur (WE) de l'ouverture de délestage (21) est plus grande que le diamètre extérieur (DA) du boulon de maintien (19).

7. Dispositif de protection en cas de choc latéral selon la revendication 1, **caractérisé en ce que** la largeur (WE) du trou oblong (24) diminue dans la section du trou (27) située à l'opposé de l'ouverture de fixation (20) et **en ce que** la largeur (WE) dans cette section de trou (27) est au moins localement plus petite que le diamètre extérieur (DA) du boulon de maintien (19).

8. Dispositif de protection en cas de choc latéral selon la revendication 1, **caractérisé en ce que** la largeur (WE) de l'ouverture de délestage (21) est plus petite que le diamètre extérieur (DA) du boulon de maintien (19).

9. Dispositif de protection en cas de choc latéral selon la revendication 8, **caractérisé en ce que** l'ouverture de délestage (21) et l'ouverture de fixation (18, 20) sont réalisées en traversée avec un contour en forme de trou de serrure (KT).

10. Dispositif de protection en cas de choc latéral selon la revendication 1, **caractérisé en ce que** la largeur (WE) de l'ouverture de délestage (21) est égale au diamètre extérieur (DA) du boulon de maintien (19).

11. Dispositif de protection en cas de choc latéral selon la revendication 7 ou 8, **caractérisé en ce que** l'ouverture de délestage (21) - vue transversalement à la dimension longitudinale (LE) de la poutre de choc latéral (8) - est disposée de façon décalée par rapport à l'ouverture de fixation (18, 20).

12. Dispositif de protection en cas de choc latéral selon la revendication 1, **caractérisé en ce que** la poutre de choc latéral (8) est formée par un profilé extrudé en métal léger et la console (10, 11) est formée par une pièce moulée en métal léger.

13. Dispositif de protection en cas de choc latéral selon la revendication 1 ou 12, **caractérisé en ce que** la poutre de choc latéral (8) est réalisée sous la forme d'un profilé creux fermé (HP).

14. Dispositif de protection en cas de choc latéral selon la revendication 5, **caractérisé en ce que** l'appui (25) est formé par une saillie et présente une surface d'appui courbe (26).

15. Porte de véhicule automobile avec un dispositif de protection en cas de choc latéral selon au moins une des revendications 1 à 14.

16. Porte de véhicule automobile selon la revendication 15, **caractérisée en ce que** la console (10, 11) est formée d'une seule pièce avec la partie de porte de véhicule automobile (2).

17. Porte de véhicule automobile selon la revendication 15 ou 16, **caractérisée en ce que** la partie de porte de véhicule automobile (2) et la console (10, 11) sont fabriquées sous forme de pièces moulées en métal léger.

18. Porte de véhicule automobile selon la revendication 15, **caractérisée en ce que** la partie de porte de véhicule automobile (2) est réalisée en forme de cadre avec deux bras de cadre (6) sensiblement dressés situés à distance l'un de l'autre, **en ce qu'**une console (10, 11) est disposée sur au moins un des bras de cadre (6) et **en ce que** la poutre de choc latéral (8) s'étend transversalement entre les deux bras de cadre (6).

19. Porte de véhicule automobile selon la revendication 16, **caractérisée en ce que** l'axe longitudinal (LA) du boulon de maintien (19) est sensiblement parallèle au bras de cadre vertical (6).

20. Porte de véhicule automobile selon la revendication 15 et 17, **caractérisée en ce que** la console (10, 11) est coulée dans la partie de porte de véhicule automobile (2).
